# EUROPEAN PATENT APPLICATION

(11) **EP 4 664 053 A1**
(43) Date of publication of application: **17.12.2025**
(21) Application number: 24181737.8
(22) Date of filing: 12.06.2024
(51) Int. Cl.: F28F 21/08, B23K 1/00, F28F 1/02, F28F 1/12, B23K 35/02, B23K 35/28, B32B 15/01, C22C 1/02, C22C 38/00

(54) **FINNED TUBE FOR HEAT EXCHANGERS**

(71) Applicant: SPG Dry Cooling Belgium, 1200 Brussels (Woluwe-Saint-Lambert) (BE)
(72) Inventor: Zhou, Zhenhua, Shanghai, Minhang District, - (CN); Vouche, Michel, 1200 Woluwe-Saint-Lambert (BE)
(74) Representative: Icosa Europe

(57) **Abstract**

The invention provides a finned tube (1) for a heat exchanger, comprising a flat tube (2) onto which is brazed at least one serpentine-shaped fin (3). The flat tube (2) is made of a ferrous material that is covered on its outer surface with a first layer (4B) of an aluminum alloy. At least a part of the first layer (4B) of the aluminum alloy is covered with a second layer (4C) of an aluminum brazing alloy. The serpentine-shaped fin (3) comprises an aluminum alloy and is brazed on at least a part of an outer surface of the flat tube (2). The invention also provides a heat exchanger comprising an assembly of a plurality of such finned tubes and a method to manufacture such a finned tube (1).

## Description

### Field of the invention

The invention relates to a finned tube for heat exchangers, more particularly for heat exchangers to condense steam.

The invention also relates to a heat exchanger comprising such finned tubes and to a method of manufacturing such finned tubes.

### Description of prior art

Heat exchangers to condense steam, more particularly to condense steam output by a turbine of an electric power plant are known in the art. They generally comprise an assembly of finned tubes into which the steam flows and is condensed to water following to a heat exchange of the steam with an external fluid such as ambient air and/or water for example.

US 5,277,358 discloses a finned tube for such heat exchangers. The finned tube comprises a flattened tube made of a ferrous material coated with aluminum, and a serpentine fin made of aluminum and cladded with an aluminum brazing alloy including AlSi for example. The serpentine fin is brazed on an outer surface of the flattened tube to yield the finned tube. A disadvantage of such finned tube is that it requires a high amount of aluminum brazing alloy and also that its manufacturing requires many different steps.

US 4,949,543 discloses a similar finned tube as US 5,277,358.

US 5,490,559 also discloses a finned tube for heat exchangers. In this case, no serpentine fins are used, but rather surface packets which are bonded to the flat tube with an organic adhesive such as an epoxy resin or a nitrile-phenolic adhesive for instance. Such a design is however not applicable to serpentine fins because such fins offer much less contact surface with the flattened tube, so that it would not offer sufficient strength to the assembly.

### Summary of the invention

It is an object of the invention to address the problems of the state of the art finned tubes. It is more particularly an object of the invention to provide a finned tube which uses less aluminum brazing alloy. It may be another an object of the invention to provide a finned tube which can be more easily manufactured.

The invention is defined by the independent claims. The dependent claims define advantageous embodiments.

According to the invention, there is provided a finned tube for a heat exchanger. The finned tube comprises a flat tube made of a ferrous material covered on its outer surface with a first layer of an aluminum alloy. The finned tube also comprises a serpentine-shaped fin attached to the flat tube and comprising at least one aluminum alloy. At least a part of an outer surface of the first layer of the aluminum alloy of the flat tube is covered, for example cladded or laminated, with a second layer of an aluminum brazing alloy, and the serpentine fin is brazed on at least a part of an outer surface of the flat tube. By cladded or laminated, one has to understand that the first layer of the aluminum alloy and the second layer of an aluminum brazing alloy of the flat tube are bonded together and not simply superimposed. As is well known in the art of metalworking, cladding or laminating is the bonding together of dissimilar metals. Cladding or laminating is for example achieved by pressing or rolling sheets of different metals together under high pressure.

Indeed, such a structure requires much less aluminum brazing alloy because the surface to be covered with the aluminum brazing alloy on the flat tube is much smaller than the surface of the serpentine fin. Such a structure may also be easier to produce, as will become apparent when discussing a manufacturing method of the finned tube.

In some examples, only a top flat surface portion and only a bottom flat surface portion of the outer surface of the first layer of the aluminum alloy of the flat tube is cladded or laminated with the aluminum brazing alloy.

In some examples, the ferrous material of the flat tube is steel.

In some examples, the first layer of the aluminum alloy of the flat tube is an alloy of the AA-1000 series, or of the AA-3000 series, or of the AA-8000 series (reference being made to the standards of the American Aluminum Association).

In some examples, the second layer of the aluminum brazing alloy comprises an aluminum-silicon (AlSi) alloy. In some examples, the aluminum-silicon (AlSi) alloy is an aluminum alloy of the AA-4000 series, such as AA-4343 or AA-4045 for example (reference being made to the standards of the American Aluminum Association).

The invention also provides a heat exchanger comprising a plurality of such finned tubes. In some examples, the tube of each finned tube is adapted to convey steam and the heat exchanger is to condense the steam.

The invention also provides an air-cooled condenser comprising one or more of such heat exchangers.

The invention also provides a method of manufacturing a finned tube, comprising the following steps:
a) placing a foil of an aluminum alloy on top of a foil of a ferrous material,
b) placing one or more foils of an aluminum brazing alloy on top of the foil of aluminum alloy,
c) laminating or cladding the foil of ferrous material, the foil of aluminum alloy and the one or more foils of aluminum brazing alloy together to obtain a bonded assembly, optionally by reducing the thickness of the bonded assembly to a desired thickness,
d) forming a flat tube from the bonded assembly,
e) providing a foil comprising at least one aluminum alloy and forming it to a serpentine-shaped fin,
f) placing the serpentine-shaped fin in contact with an outer surface of the flat tube,
g) heating the serpentine-shaped fin and the flat tube to a temperature that is sufficient to melt the aluminum brazing alloy so as to braze the serpentine-shaped fin on the flat tube.

Such a method presents the advantage that the foil of ferrous material, the aluminum alloy layer and the layer of aluminum brazing alloy are laminated or cladded together in one step, whereas, with prior art methods, one has to laminate or clad an aluminum brazing alloy on the serpentine fin and to separately laminate or clad an aluminum layer on the foil of ferrous material. It also presents the advantage that the finned tube produced with such method requires less aluminum brazing alloy.

### Short description of the drawings

These and further aspects of the invention will be explained in greater detail by way of examples and with reference to the accompanying drawings in which:
- Fig.1: shows an exemplary finned tube according to the invention;
- Fig.2: shows a cross-sectional view according to plane AA of the finned tube of Fig.1 ;
- Fig.3: shows a cross-sectional view according to plane AA of the finned tube of Fig.1 when fins are attached at both flat sides of the flat tube;
- Fig.4: shows a cross-sectional view according to plane BB of a preferred embodiment of the finned tube of Fig.1 when fins are attached at both flat sides of the flat tube;
- Fig.5: shows a cross-sectional view according to plane AA of an assembly of a plurality of finned tubes as shown on Fig.3;
- Fig.6: shows a cross-sectional view according to plane AA of an assembly of a plurality of finned tubes as shown on Fig.1 ;
- Fig.7: shows a heat exchanger comprising a plurality of finned tubes according to the invention;
- Fig.8: shows an air-cooled condenser comprising a plurality of heat exchangers according to the invention.

The drawings of the figures are neither drawn to scale nor proportioned. Generally, similar or identical components are denoted by the same reference numerals in the figures.

### Detailed description of embodiments of the invention

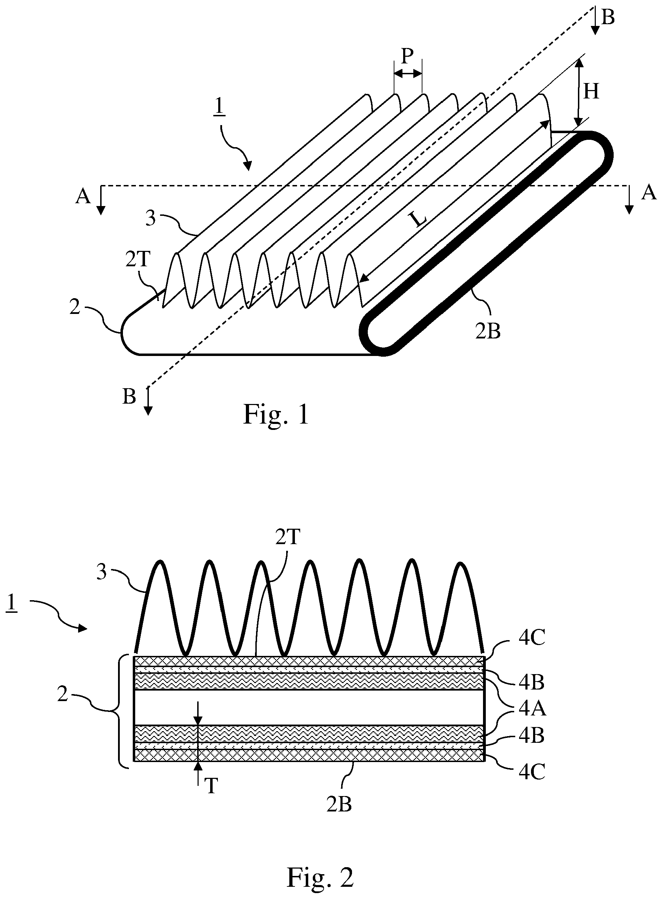

Fig.1 shows an exemplary finned tube (1) according to the invention. The finned tube (1) is a heat exchanger in itself or is part of a heat exchanger comprising for example a plurality of such finned tubes. The finned tube (1) comprises a flat tube (2) adapted to convey a fluid to be cooled, such as (but not limited to) steam for example. The finned tube (1) also comprises a serpentine-shaped fin (3) attached to an outer surface of the flat tube (2), as shown on Fig.1 , in order to increase a heat exchange surface with an ambient fluid such as ambient air for example.

In case the flat tube (2) is to convey steam and the ambient fluid is ambient air, the finned tube (1) is generally used to condense the steam.

The serpentine-shaped fin (3) comprises at least one aluminum alloy. In some examples, the serpentine-shaped fin (3) does not comprise an aluminum brazing alloy. In some examples, the serpentine-shaped fin (3) does not comprise an Aluminum-Silicon (AlSi) alloy. In some examples, the serpentine-shaped fin (3) does not comprise an Aluminum-Silicon (AlSi) alloy of the AA-4000 series.

The flat tube (2) is made of a ferrous material core (4A) that is covered on its outer surface with a first layer (4B) of an aluminum alloy. Specific to the invention is that at least a part of an outer surface of the first layer (4B) of the aluminum alloy of the flat tube (2) is cladded or laminated with a second layer (4C) of an aluminum brazing alloy. The serpentine-shaped fin (3) is furthermore brazed on at least a part of an outer surface of the flat tube (2).

Fig.2 shows a cross-sectional view according to plane AA of the finned tube (1) of Fig.1. On this figure one can see the different layers of the flat tube (2). The flat tube (2) has a top outer flat surface and a bottom outer flat surface (2B). In the present disclosure, the terms "top" and "bottom" are not necessarily related to a position in space of the flat surfaces of the flat tube (2) when in use, but are only used to refer to the flat tube (2) as shown on Fig.1.

The innermost portion of the flat tube (2) is a core (4A) made of the ferrous material. The outer surface of the core (4A) is covered at least partially and in some examples totally or almost totally with the first layer (4B) of the aluminum alloy. The first layer (4B) of the aluminum alloy has indeed a function to limit the corrosion of the core (4A) of the flat tube (2) in addition to a function of enabling the brazing of the serpentine-shaped fin (3) onto it.

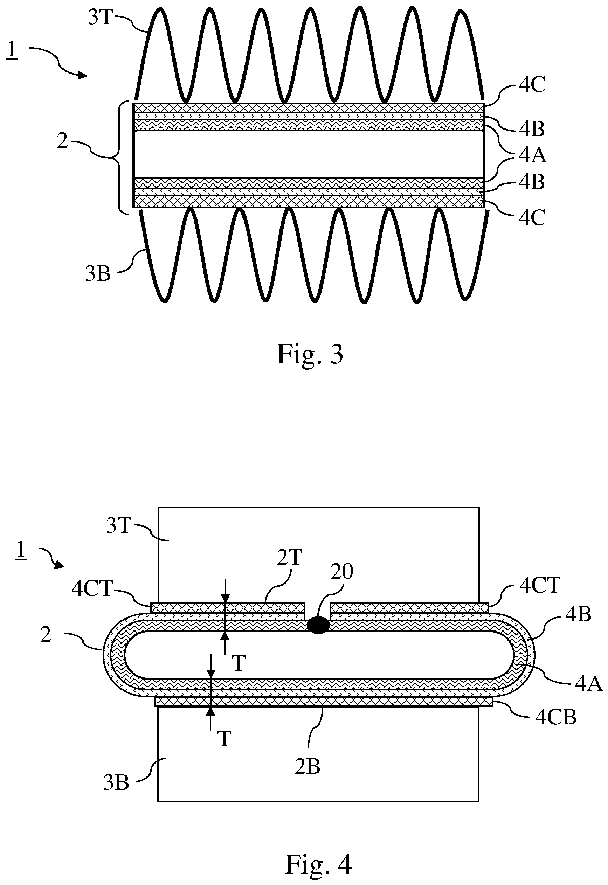

The outer surface of the first layer (4B) of the aluminum alloy of the flat tube (2) is covered at least partially with the second layer (4C) of the aluminum brazing alloy. In the example of Fig.2, the second layer (4C) of the aluminum brazing alloy covers the entire outer surface of the first layer (4B) of the aluminum alloy. In other examples, the second layer (4C) of the aluminum brazing alloy covers only a part of the outer surface of the first layer (4B) of the aluminum alloy, for example in case the serpentine-shaped fin (3) is only brazed to one flat side of the flat tube (2), or in case of other examples as is the case of the example of Fig.4.

Fig.3 shows a cross-sectional view according to plane AA of the finned tube (1) of Fig.1 when serpentine-shaped fins (3) are attached (brazed) to opposite flat sides of the flat tube (2). In this example, a first serpentine-shaped fin (3) is attached (brazed) to the top outer flat surface of the flat tube (2) and a second serpentine-shaped fin (3) is attached (brazed) to the bottom outer flat surface (2B) of the flat tube (2). In such a case, the aluminum brazing alloy covers preferably at least those portions of the first layer (4B) of aluminum alloy of the flat tube (2) where the first and second serpentine-shaped fins (3) are arranged.

Fig.4 shows a cross-sectional view according to plane BB of a preferred embodiment of the finned tube (1) of Fig.1 when fins are attached at both sides of the flat tube (2). As shown on Fig.4, and as is the case for Fig.3, a first serpentine-shaped fin (3) is attached (brazed) to the top outer flat surface of the flat tube (2) and a second serpentine-shaped fin (3) is attached (brazed) to the bottom outer flat surface (2B) of the flat tube (2). Specific to the example of

Fig.4 is that only a top flat surface portion and only a bottom flat surface portion of the aluminum layer (4B) of the flat tube (2) is cladded or laminated with the aluminum brazing alloy (4CT, 4CB). As can be seen on Fig. 4, the second layer (4C) of aluminum brazing alloy is composed of two top parts (4CT) and a bottom part (4CB) only. This allows to reduce the needed amount of aluminum brazing alloy.

In some examples, and as specifically shown on Fig. 4, the two top parts (4CT) of the second layer (4C) of aluminum brazing alloy and the top part of the aluminum layer (4B) of the flat tube (2) don't cover a portion of the flat tube (2) where a weld bead (20) is present.

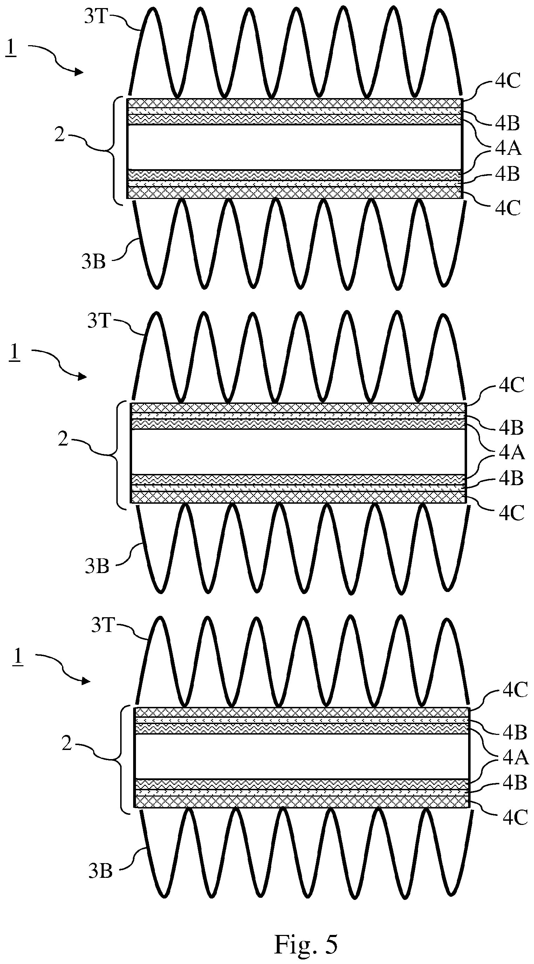

Fig.5 shows a cross-sectional view according to plane AA of an assembly of a plurality of finned tubes (1) as shown on Fig.3 and arranged side by side. A small gap of a few millimeters for example separate each two adjacent finned tubes (1).

Obviously, more than three finned tubes (1) may be assembled in a similar way

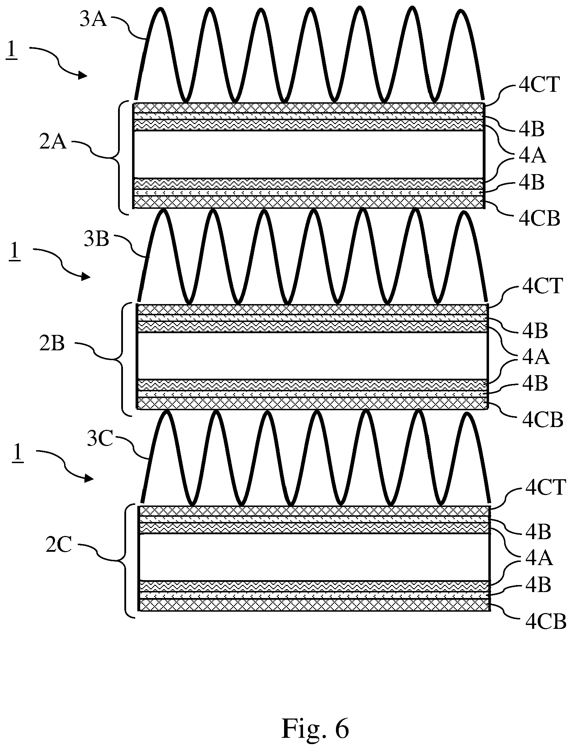

Fig.6 shows a cross-sectional view according to plane AA of an assembly of a plurality of finned tubes (1) as shown on Fig.1 and arranged side by side so that two adjacent flat tubes (2) share a common serpentine-shaped fin (3). As shown on Fig.5, a first flat tube (2A) shares a first common fin (3B) with a second flat tube (2B) and the second flat tube (2B) shares a second common fin (3C) with a third flat tube (2C). The first common fin (3B) is attached (brazed) to both the first flat tube (2A) and the second flat tube (2B). The second common fin (3C) is attached (brazed) to both the second flat tube (2B) and the third flat tube (2C). Obviously, more than three finned tubes (1) may be assembled in a similar way.

In some examples, the core (4A) of the flat tube (2) is made of steel, such as carbon steel for example.

In some examples, the first layer (4B) of the aluminum alloy of the flat tube (2) is an alloy of the AA-1000 series, or of the AA-3000 series, or of the AA-8000 series (reference being made to the standards of the American Aluminum Association).

In some examples, the second layer (4C) of the aluminum brazing alloy comprises an aluminum-silicon (AlSi) alloy. In some examples, the aluminum-silicon (AlSi) alloy is an aluminum alloy of the AA-4000 series, such as AA-4343 or AA-4045 for example (reference being made to the standards of the American Aluminum Association).

The composition of an AA-4343 alloy is typically the following:
- Silicon : 6,8 % - 8,2 %
- Iron : <= 0,8 %
- Copper : <= 0,25 %
- Manganese : <= 0,1 %
- Zinc : <= 0,2 %
- Others : <= 0,15%
- Aluminum : the remainder amount

The dimensions of the flat tube (2) and of the serpentine-shaped fin (3) may be very variable, depending on the field of application.

In case the finned tube (1) is used in a heat exchanger to condense steam coming from a turbine of an electric power plant, the flat tube (2) may for example have (referring to Fig.1) a cross section of 20 mm by 300 mm (outer dimensions) and a length of 2 m to 12 m, whereas the serpentine-shaped fin (3) may for example have a height (H) of 20 mm, a length (L) of 200 mm and a pitch (P) of 2 to 3 mm.

In some examples, the flat tube (2) has thickness (T) in the range of 0,5 mm to 2,5 mm, preferably in the range of 1 mm to 2 mm, preferably 1,5 mm.

In some examples, the first layer (4B) of aluminum alloy has thickness in the range of 10 microns to 100 microns, preferably in the range of 30 microns to 70 microns, preferably in the range of 40 microns to 60 microns, preferably 50 microns.

In some examples, the second layer (4C) of aluminum brazing alloy has thickness in the range of 10 microns to 200 microns, preferably in the range of 20 microns to 100 microns, preferably 50 microns.

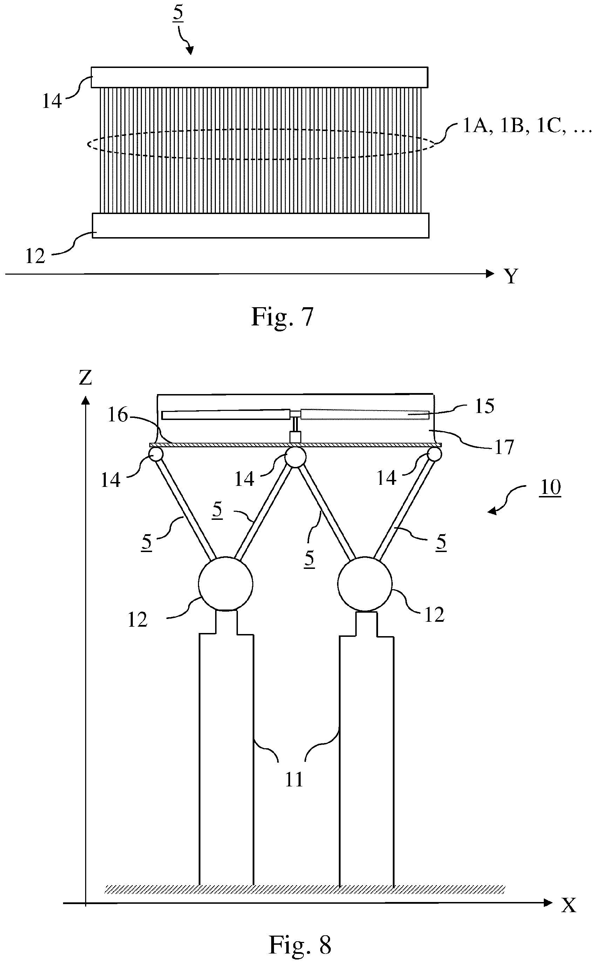

Fig.7 shows an exemplary heat exchanger comprising a plurality of finned tubes (1A, 1B, 1C, ...) according to the invention. In this example, the finned tubes are arranged parallel to each other and in a same plane. The top ends of the finned tubes are fluidly connected to a top manifold (14) and the bottom ends of the finned tubes are fluidly connected to a bottom manifold (12).

In some examples, each finned tube (1) is adapted to convey steam and the heat exchanger (sometimes called a tube bundle) is to condense the steam. In use, steam may be introduced into the top or bottom manifold and, following to a cooling of the heat exchanger by ambient air and/or water for example, condensates will flow down by gravity to the bottom manifold where they can be collected.

Fig.8 shows an exemplary air-cooled condenser (10) comprising a plurality of heat exchangers (5) according to the invention. In this example, the air-cooled condenser comprises four heat exchangers (5) arranged by pair in two "V" configurations. A fan (15) is arranged on top of the four heat exchangers and is supported by a fan deck (16). The fan (15) is surrounded by a fan shroud (17).

Each pair of heat exchangers has a common bottom manifold (12) and two top manifolds (14). The two pairs of heat exchangers (5) are supported by a supporting structure (11) made for example of two pillars. Steam may for example be introduced into the two bottom manifolds (12). Such air-cooled condensers are generally known in the art and are sometimes referred to as induced draft air-cooled condensers. Other types of air-cooled condensers, such as forced draft air cooled condensers for example, may also use heat exchangers according to the present disclosure.

The invention also provides a method of manufacturing a finned tube and comprising the following steps:
a) Placing a foil of an aluminum alloy on top of a foil of a ferrous material. In some examples, the aluminum alloy is an AI-3003 alloy as described herein. In some examples, the ferrous material is steel;
b) Placing one or more foils of an aluminum brazing alloy on top of the foil of the aluminum alloy. In some examples, the aluminum brazing alloy comprises an aluminum-silicon (AlSi) alloy. In some examples, the AlSi alloy is an AA-4343 alloy as described herein;
c) Laminating or cladding the foil of ferrous material, the foil of aluminum alloy and the one or more foils of aluminum brazing alloy together to obtain a bonded assembly, optionally by reducing the thickness of the bonded assembly to a desired thickness. In some examples, the desired thickness of the bonded assembly is a thickness between 0,5 mm and 2,5 mm, preferably a thickness of 1,5 mm;
d) Forming a flat tube (2) from the bonded assembly. Optionally, the formed flat tube (2) is cut into sections of appropriate lengths;
e) Providing a foil comprising at least one aluminum alloy and forming it to a serpentine-shaped fin. In some examples, the thickness of the second foil is comprised between 0,1 mm and 0,5 mm, preferably 0,2 mm;
f) Placing the serpentine-shaped fin (3) in contact with at least one flat side (2T and/or 2B) of the flat tube (2) (as shown on Fig.2 and Fig.3 for example);
g) Heating the serpentine-shaped fin and the flat tube to a temperature that is sufficient to melt the aluminum brazing alloy so as to braze the serpentine-shaped fin on the flat tube. In case the aluminum brazing alloy is an AA-4343 alloy, the heating temperature is for example a temperature between 577°C and 613°C.

In some examples, the step b) of the method comprises the substeps of placing a first foil of an aluminum brazing alloy on top of the foil of the aluminum alloy at a first location and of placing a second foil of the aluminum brazing alloy on top of the foil of the aluminum alloy at a second location distant from the first location, and the step d) of the method comprises forming a flat tube (2) from the bonded assembly such that the first location corresponds to a top flat part of the flat tube (2) and such that the second location corresponds to a bottom flat part of the flat tube (2), the top flat part being opposite to the bottom flat part (as illustrated on Fig. 4 for example).

The present invention has been described in terms of specific embodiments, which are illustrative of the invention and not to be construed as limiting. More generally, it will be appreciated by persons skilled in the art that the present invention is not limited by what has been particularly shown and/or described hereinabove.

Reference numerals in the claims do not limit their protective scope.

Use of the verbs "to comprise", "to include", "to be composed of", or any other variant, as well as their respective conjugations, does not exclude the presence of elements other than those stated.

Use of the article "a", "an" or "the" preceding an element does not exclude the presence of a plurality of such elements.

The invention may also be described as follows: a finned tube (1) for a heat exchanger, the finned tube (1) comprising a flat tube (2) onto which is brazed a serpentine-shaped fin (3). The flat tube (2) is made of a core (4A) of a ferrous material that is covered at least partially on its outer surface with a first layer (4B) of an aluminum alloy. At least a part of the first layer (4B) of the aluminum alloy is covered with a second layer (4C) of an aluminum brazing alloy. The serpentine-shaped fin (3) comprises at least one aluminum alloy and is brazed on at least a part of an outer surface of the flat tube (2). The invention also provides a heat exchanger comprising an assembly of a plurality of such finned tubes and a method to manufacture such a finned tube.

## Claims

1. Finned tube (1) for a heat exchanger, the finned tube (1) comprising a flat tube (2) made of a ferrous material covered on its outer surface with a first layer (4B) of an aluminum alloy, and a serpentine-shaped fin (3) attached to the flat tube (2) and comprising at least one aluminum alloy,
**characterized in that** at least a part of an outer surface of the first layer (4B) of the aluminum alloy of the flat tube (2) is cladded or laminated with a second layer (4C) of an aluminum brazing alloy, and **in that** the serpentine fin is brazed on at least a part of an outer surface of the flat tube (2).

2. Finned tube (1) according to claim 1, **characterized in that** only a top flat surface portion and only a bottom flat surface portion of the outer surface of the first layer (4B) of the aluminum alloy of the flat tube (2) is cladded or laminated with the aluminum brazing alloy.

3. Finned tube (1) according to claim 1 or 2, **characterized in that** the ferrous material of the flat tube (2) is steel.

4. Finned tube (1) according to any of claims 1 to 3, **characterized in that** the second layer (4C) of the aluminum brazing alloy comprises an aluminum-silicon (AlSi) alloy.

5. Finned tube (1) according to any of preceding claims, **characterized in that** the flat tube (2) has thickness (T) in the range of 0,5 mm to 2 mm, preferably in the range of 1 mm to 2 mm, preferably 1,5 mm.

6. Finned tube (1) according to any of preceding claims, **characterized in that** the first layer (4B) of the aluminum alloy has thickness in the range of 10 microns to 100 microns, preferably in the range of 30 microns to 70 microns, preferably in the range of 40 microns to 60 microns, preferably 50 microns.

7. Finned tube (1) according to any of preceding claims, **characterized in that** the second layer (4C) of the aluminum brazing alloy has thickness in the range of 10 microns to 200 microns, preferably in the range of 20 microns to 100 microns, preferably 50 microns.

8. Heat exchanger comprising an assembly of a plurality of finned tubes according to any of preceding claims.

9. Heat exchanger according to claim 8, wherein the flat tube (2) of each finned tube (1) is adapted to convey steam and wherein the heat exchanger is to condense the steam.

10. Air-cooled condenser comprising one or more heat exchangers according to claim 8 or 9.

11. Method of manufacturing a finned tube, comprising the following steps:
a) placing a foil of an aluminum alloy on top of a foil of a ferrous material,
b) placing one or more foils of an aluminum brazing alloy on top of the foil of aluminum alloy,
c) laminating or cladding the foil of ferrous material, the foil of aluminum alloy and the one or more foils of aluminum brazing alloy together to obtain a bonded assembly, optionally by reducing the thickness of the bonded assembly to a desired thickness,
d) forming a flat tube from the bonded assembly,
e) providing a foil comprising at least one aluminum alloy and forming it to a serpentine-shaped fin,
f) placing the serpentine-shaped fin in contact with an outer surface of the flat tube,
g) heating the serpentine-shaped fin and the flat tube to a temperature that is sufficient to melt the aluminum brazing alloy so as to braze the serpentine-shaped fin on the flat tube.

12. Method of manufacturing a finned tube according to claim 11, wherein the ferrous material is steel.

13. Method of manufacturing a finned tube according to claim 11 or 12, wherein the aluminum brazing alloy comprises an aluminum-silicon (AlSi) alloy.

14. Method of manufacturing a finned tube according to any of claims 11 to 13, **characterized in that** step b) comprises placing a first foil of an aluminum brazing alloy on top of the foil of the aluminum alloy at a first location and placing a second foil of the aluminum brazing alloy on top of the foil of the aluminum alloy at a second location distant from the first location, and **in that** step d) comprises forming a flat tube from the bonded assembly such that the first location corresponds to a top flat part of the flat tube and such that the second location corresponds to a bottom flat part of the flat tube, the top flat part being opposite to the bottom flat part .
